# EUROPEAN PATENT APPLICATION

(11) **EP 4 529 331 A1**
(43) Date of publication of application: **26.03.2025**
(21) Application number: 23856161.7
(22) Date of filing: 30.05.2023
(51) Int. Cl.: H04W 72/21, H04W 72/0453

(54) **INTERFERENCE SUPPRESSION METHOD AND SYSTEM, AND TERMINAL AND BASE STATION**

(30) Priority: 24.08.2022 CN 202211019904
(71) Applicant: China Telecom Corporation Limited, Beijing 100033 (CN)
(72) Inventor: WU, Jingzhou, Beijing 100033 (CN); YANG, Shan, Beijing 100033 (CN); LIN, Pei, Beijing 100033 (CN); SHE, Xiaoming, Beijing 100033 (CN)
(74) Representative: Reddie & Grose LLP
(86) International application number: PCT/CN2023/097043
(87) International publication number: WO 2024/041069

(57) **Abstract**

The present disclosure relates to an interference suppression method and system, and a terminal and a base station, and relates to the technical field of communications. The method of the present disclosure is executed by means of a terminal, and comprises: reporting cell-specific reference signal (CRS) interference suppression capability information to a base station, wherein the CRS interference suppression capability information is used for indicating whether a terminal located in a first-standard cell supports interference suppression of a CRS of a second-standard neighboring cell in a scenario of spectrum sharing between a first standard and a second standard; receiving neighboring cell CRS auxiliary information, which is sent by the base station, wherein the neighboring cell CRS auxiliary information comprises information related to CRSs of one or more second-standard neighboring cells; and performing interference suppression according to the neighboring cell CRS auxiliary information.

## Description

### CROSS-REFERENCE TO RELATED APPLICATIONS

This application is based on and claims the benefit of priority to the Chinese patent application No. 202211019904.X filed on August 24, 2022, which is hereby incorporated by reference in its entirety into the present application.

### TECHNICAL FIELD

The present disclosure relates to a technical field of communication technology, and in particular to an interference mitigation method and system, and a terminal, and a base station.

### BACKGROUND

Dynamic Spectrum Sharing (DSS) technology (also known as LTE-NR coexistence technology) between LTE (Long Term Evolution) and NR (New Radio) is one of important features introduced in an early stage of the present 5G (5th Generation Mobile Communication Technology) network deployment to save station construction costs and deployment time. The essence of DSS is that LTE and NR share the same spectrum, and 4G or 5G transmission is carried out dynamically by the network side based on network load and other factors for allocating resources to terminals.

### SUMMARY

According to some embodiments of the present disclosure, an interference mitigation method is provided, which is executed by a terminal, and comprises: reporting capability information of Cell-specific Reference Signal (CRS) interference mitigation to a base station, wherein the capability information of the CRS interference mitigation is used to indicate whether the terminal in a cell of a first mode supports the CRS interference mitigation of a neighbor cell of a second mode in a scenario with overlapping spectrum for the first mode and the second mode; receiving neighbor cell CRS assist information sent from the base station, wherein the neighbor cell CRS assist information comprises CRS related information of one or more neighbor cells of the second mode; and performing interference mitigation according to the neighbor cell CRS assist information.

In some embodiments, the CRS related information of each of the one or more neighbor cells of the second mode comprises at least one of first indication information or a frequency domain deviation value, the first indication information is used to indicate whether overlapped spectrums of the each of the one or more neighbor cells of the second mode and the cell of the first mode are aligned in frequency domain, and the frequency domain deviation value is the frequency domain deviation value of the overlapped spectrums of the each of the one or more neighbor cells of the second mode and the cell of the first mode.

In some embodiments, in a case where the neighbor cell CRS assist information comprises the CRS related information of multiple neighbor cells of the second mode, the CRS related information of each of the multiple neighbor cells of the second mode comprises a physical cell identifier of the each of the multiple neighbor cells of the second mode.

In some embodiments, the method further comprises: receiving second mode CRS pattern information sent from the base station, wherein the second mode CRS pattern information comprises configuration information of one or more CRSs corresponding to one or more cells of the second mode.

In some embodiments, in a case where the second mode CRS pattern information comprises configuration information of multiple CRSs, configuration information of a CRS corresponding to each cell of the second mode comprises a downlink carrier frequency, a downlink carrier bandwidth, a number of CRS ports and a remainder of a physical cell identifier modulo 6 of the each cell of the second mode, and the CRS related information of each of the one or more neighbor cells of the second mode comprises an index, used to identify configuration information of a CRS corresponding to a CRS of the each of the one or more neighbor cells of the second mode, or the CRS related information of the each of the one or more neighbor cells of the second mode comprises a downlink carrier frequency, a downlink carrier bandwidth, a number of CRS ports and a remainder of a physical cell identifier modulo 6 of the each of the one or more neighbor cells of the second mode.

In some embodiments, in a case where the second mode CRS pattern information comprises configuration information of multiple CRSs , configuration information of a CRS corresponding to each cell of the second mode comprises a downlink carrier frequency, a downlink carrier bandwidth, a multicast broadcast single frequency network (MBSFN) subframe configuration, a number of CRS ports and a remainder of a physical cell identifier modulo 6 of the each cell of the second mode, and the CRS related information of each of the one or more neighbor cells of the second mode comprises an index, used to identify the configuration information of a CRS corresponding to a CRS of the each of the one or more neighbor cells of the second mode, or the CRS related information of the each of the one or more cells of the second mode comprises a downlink carrier frequency, a downlink carrier bandwidth, a MBSFN subframe configuration a number of CRS ports and a remainder of a physical cell identifier modulo 6 of the each of the one or more neighbor cells of the second mode.

**In** some embodiments, the index corresponds to an index order of configuration information of each of the multiple CRSs.

**In** some embodiments, the CRS related information of each of the one or more neighbor cells of the second mode comprises third indication information, used to indicate whether the CRS related information of the each of the one or more neighbor cells of the second mode meets default network configuration information; or the neighbor cell CRS assist information further comprises fourth indication information, used to indicate whether the CRS related information of the one or more neighbor cells of the second mode meets the default configuration information configured by the network.

**In** some embodiments, in a case where the third indication information indicates that the CRS related information of the each of the one or more neighbor cells of the second mode does not meet the default configuration information configured by the network, or the fourth indication information indicates that the CRS related information of the one or more neighbor cells of the second mode does not meet the default configuration information configured by the network, the third indication information or the fourth indication information is also used to implicitly indicate the terminal to disable interference mitigation operation to the CRS of the one or more neighbor cells of the second mode.

In some embodiments, the CRS related information of the each of the one or more neighbor cells of the second mode further comprises at least one of a physical cell identifier, a remainder of the physical cell identifier modulo 6, a slot number, a duplex mode indication information, a uplink/downlink subframe ratio, a cyclic prefix type indication information, a downlink carrier frequency, a downlink carrier bandwidth, a multicast broadcast single frequency network (MBSFN) subframe configuration, a number of CRS ports, or a CRS muting indication information of the each of the one or more neighbor cells of the second mode.

In some embodiments, the performing interference mitigation according to the neighbor cell CRS assist information comprises: the terminal enables interference mitigation operation to the CRS of the one or more neighbor cells of the second mode according to the neighbor cell CRS assist information to perform interference detection and interference mitigation, wherein the neighbor cell CRS assist information or a CRS rate match signaling of the second mode implicitly indicates the terminal to enable the interference mitigation operation to the CRS of the one or more neighbor cells of the second mode.

In some embodiments, the method further comprises: receiving fifth indication information sent from the base station, wherein the fifth indication information is used to indicate the terminal to enable the interference mitigation operation to the CRS of the one or more neighbor cells of the second mode.

In some e indication information is carried by a radio resource control (RRC) signaling.

In some embodiments, the method further comprises: receiving release information of the neighbor cell CRS assist information sent from the base station; and deleting the stored neighbor cell CRS assist information according to the release information of the neighbor cell CRS assist information.

In some embodiments, the neighbor cell CRS assist information is carried by a radio resource control (RRC) signaling.

In some embodiments, in a case where the neighbor cell CRS assist information comprises the CRS related information of multiple neighbor cells of the second mode, the CRS related information of each of the multiple neighbor cells of the second mode comprises: a physical cell identifier or a remainder of the physical cell identifier modulo 6 of the each of the multiple neighbor cells of the second mode.

According to other embodiments of the present disclosure, an interference mitigation method is provided, which is executed by a base station, and comprises: receiving capability information of Cell-specific Reference Signal (CRS) interference mitigation reported by a terminal, wherein the capability information of the CRS interference mitigation is used to indicate whether the terminal in a cell of a first mode supports the CRS interference mitigation of a neighbor cell of a second mode in a scenario with overlapping spectrum for the first mode and the second mode; and sending neighbor cell CRS assist information to the terminal, wherein the neighbor cell CRS assist information comprises CRS related information of one or more neighbor cells of the second mode, for assisting the terminal to perform interference mitigation on a CRS(s) of the one or more neighbor cells of the second mode.

In some embodiments, the CRS related information of each of the one or more neighbor cells of the second mode comprises at least one of first indication information or a frequency domain deviation value, the first indication information is used to indicate whether overlapped spectrums of the each of the one or more neighbor cells of the second mode and the cell of the first mode are aligned in frequency domain, and the frequency domain deviation value is the frequency domain deviation value of the overlapped spectrums of the each of the one or more neighbor cells of the second mode and the cell of the first mode.

In some embodiments, in the case where the neighbor cell CRS assist information comprises the CRS related information of multiple neighbor cells of the second mode, the CRS related information of each of the multiple neighbor cells of the second mode comprises a physical cell identifier or a remainder of the physical cell identifier modulo 6 of the each of the multiple neighbor cells of the second mode.

In some embodiments, the method further comprises: sending second mode CRS pattern information to the terminal, wherein the second mode CRS pattern information comprises configuration information of one or more CRSs corresponding to one or more cells of the second mode.

In some embodiments, in a case where the second mode CRS pattern information comprises configuration information of multiple CRSs, configuration information of a CRS corresponding to each cell of the second mode comprises a downlink carrier frequency, a downlink carrier bandwidth, a number of CRS ports and a remainder of a physical cell identifier modulo 6 of the each cell of the second mode, and the CRS related information of each of the one or more neighbor cells of the second mode comprises an index, used to identify configuration information of a CRS corresponding to a CRS of the each of the one or more neighbor cells of the second mode, or a group of related information of the CRS of the each of the one or more neighbor cells of the second mode comprises a downlink carrier frequency, a downlink carrier bandwidth, a number of CRS ports and a remainder of a physical cell identifier modulo 6 of the each of the one or more neighbor cells of the second mode.

In some embodiments, in a case where the second mode CRS pattern information comprises configuration information of multiple CRSs , configuration information of a CRS corresponding to each cell of the second mode comprises a downlink carrier frequency, a downlink carrier bandwidth, a multicast broadcast single frequency network (MBSFN) subframe configuration, a number of CRS ports and a remainder of a physical cell identifier modulo 6 of the each cell of the second mode, and the CRS related information of each of the one or more neighbor cells of the second mode comprises an index, used to identify the configuration information of a CRS corresponding to a CRS of the each of the one or more neighbor cells of the second mode, or the CRS related information of each of the one or more neighbor cells of the second mode comprises an index, used to identify the configuration information of a CRS corresponding to a CRS of the each of the one or more neighbor cells of the second mode, or a group of related information of the CRS of the each of the one or more neighbor cells of the second mode comprises a downlink carrier frequency, a downlink carrier bandwidth, a MBSFN subframe configuration a number of CRS ports and a remainder of a physical cell identifier modulo 6 of the each of the one or more neighbor cells of the second mode.

In some embodiments, the CRS related information of each of the one or more neighbor cells of the second mode comprises third indication information, used to indicate whether a group of related information of the CRS of the each of the one or more neighbor cells of the second mode meets default network configuration information; or the neighbor cell CRS assist information further comprises fourth indication information, used to indicate whether one or more groups of related information of the CRS(s) of the one or more neighbor cells of the second mode meets the default configuration information configured by the network.

In some embodiments, in a case where the third indication information indicates that a group of related information of the CRS of the each of the one or more neighbor cells of the second mode does not meet the default configuration information configured by the network, or the fourth indication information indicates that one or more groups of related information of the CRS(s) of the one or more neighbor cells of the second mode does not meet the default configuration information configured by the network, the third indication information or the fourth indication information is also used to implicitly indicate the terminal to disable interference mitigation operation to the CRS of the one or more neighbor cells of the second mode.

In some embodiments, the method further comprises: sending fifth indication information sent from the base station, wherein the fifth indication information is used to indicate the terminal to enable the interference mitigation operation to the CRS of the one or more neighbor cells of the second mode.

According to some other embodiments of the present disclosure, a terminal is provided, which comprises: a sending module configured to report capability information of Cell-specific Reference Signal (CRS) interference mitigation to a base station, wherein the capability information of the CRS interference mitigation is used to indicate whether the terminal in a cell of a first mode supports the CRS interference mitigation of a neighbor cell of a second mode in a scenario with overlapping spectrum for the first mode and the second mode; a receiving module configured to receive neighbor cell CRS assist information sent from the base station, wherein the neighbor cell CRS assist information comprises CRS related information of one or more neighbor cells of the second mode; and an interference mitigation module configured to perform interference mitigation according to the neighbor cell CRS assist information.

According to further embodiments of the present disclosure, a base station is provided, comprising: a receiving module configured to receive capability information of Cell-specific Reference Signal (CRS) interference mitigation reported by a terminal, wherein the capability information of the CRS interference mitigation is used to indicate whether the terminal in a cell of a first mode supports the CRS interference mitigation of a neighbor cell of a second mode in a scenario with overlapping spectrum for the first mode and the second mode; and a sending module configured to send neighbor cell CRS assist information to the terminal, wherein the neighbor cell CRS assist information comprises CRS related information of one or more neighbor cells of the second mode, for assisting the terminal to perform interference mitigation on a CRS(s) of the one or more neighbor cells of the second mode.

According to still other embodiments of the present disclosure, an interference mitigation system is provided, comprising: a terminal of any of the aforesaid embodiments and a base station of any of the aforesaid embodiments.

According to still some other embodiments of the present disclosure, a communication device is provided, comprising: a processor; and a memory coupled to the processor, for storing instructions which, when executed by the processor, cause the processor to perform the interference mitigation method according to any of the aforesaid embodiments.

According to still further embodiments of the present disclosure, a non-transitory computer-readable storage medium is provided, on which a computer program is stored, wherein the program, when executed by a processor, cause the processor to execute the interference mitigation method of any of the aforesaid embodiments.

Other features and advantages of the present disclosure will become clear from the following detailed description of exemplary embodiments of the present disclosure with reference to the accompanying drawings.

### BRIEF DESCRIPTION OF THE DRAWINGS

In order to provide a clearer explanation of the technical solutions in the embodiments of the present disclosure or the prior art, a brief introduction will be given below to the accompanying drawings required by descriptions of the embodiments or the prior art. Obviously, the drawings in the following descriptions are only some of the embodiments of the present disclosure. Those skilled in the art can also obtain other drawings based on these accompanying drawings with no creative work required.
Fig. 1 is a flowchart of an interference mitigation method provided in some embodiments of the present disclosure.
Fig. 2 is a schematic structural diagram of a terminal provided in some embodiments of the present disclosure.
Fig. 3 is a schematic structural diagram of a base station provided in some embodiments of the present disclosure.
Fig. 4 is a schematic structural diagram of a communication device provided in some embodiments of the present disclosure.
Fig. 5 is a schematic structural diagram of a communication device provided in some other embodiments of the present disclosure.
Fig. 6 is a schematic structural diagram of an interference mitigation system provided in some embodiments of the present disclosure.

### DETAILED DESCRIPTION

The technical solution in the embodiments of the present disclosure will be clearly and completely described with reference to the accompanying drawings in below. Obviously, the described embodiments are only some of the embodiments of the disclosure rather than the whole embodiments. The following descriptions of at least one exemplary embodiment are merely illustrative in nature and are in no way intended to limit the disclosure, its application or uses. Based on the embodiments in the present disclosure, all other embodiments obtained by those skilled in the art without creative work fall into the protection scope of the present disclosure.

The inventors found that in a DSS scenario, neighbor cells of 4G LTE have great interference to data transmission of NR cells. With a gradual withdrawal of LTE, the amount of downlink data in the neighbor cells of LTE is gradually decreasing, but downlink CRSs (Cell-specific Reference Signals) in LTE, which are normally on and occupy fixed resources, will still greatly interfere with 5G NR terminals in the NR cells for quite a long time to come.

A technical problem to be solved by the present disclosure is how to improve reliability and accuracy of terminal reception in NR cells in the DSS scenario.

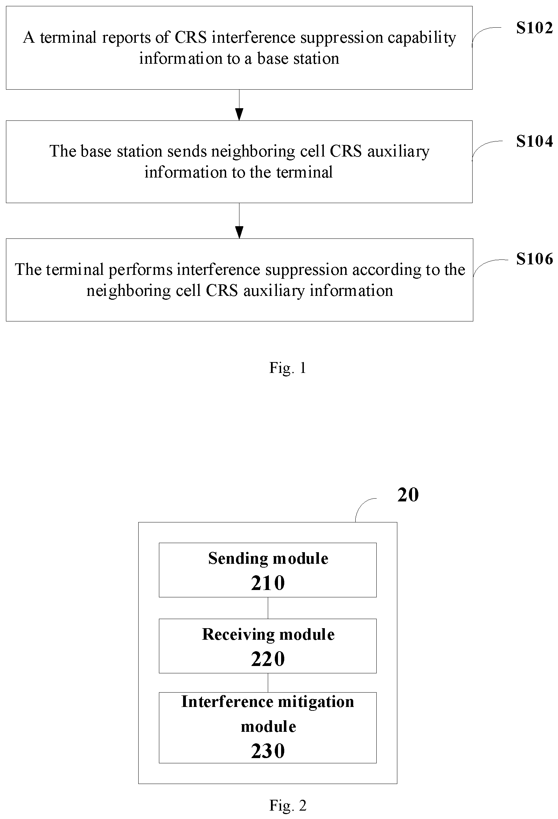

The present disclosure provides an interference mitigation method, which will be described below with reference to Fig. 1.

Fig. 1 is a flowchart of the interference mitigation in some embodiments of the present disclosure. As shown in Fig. 1, the method of the embodiments comprises: steps S102~S106.

In step S102, a terminal reports capability information of CRS interference mitigation to a base station, and correspondingly, the base station receives the capability information of the CRS interference mitigation sent from the terminal.

The terminal (also called UE) is located within a cell of a first mode, and the base station is a base station which the cell of the first mode belongs to. For example, the first mode is NR, and the second mode is LTE. Of course, the method of the present disclosure can also be applied to a scenario with overlapping spectrum for the first mode and the second mode which are other modes.

In some embodiments, the capability information of the CRS interference mitigation is used to indicate whether the terminal in a cell of a first mode supports the CRS interference mitigation of a neighbor cell of a second mode in a scenario with overlapping spectrum for the first mode and the second mode. For example, the capability information of the CRS interference mitigation is supportedCRS-InterMitigation-r17, which indicates whether the terminal supports the CRS interference mitigation in a DSS scenario and a non-DSS scenario with overlapping spectrum for LTE and NR. For example, the capability information of the CRS interference mitigation comprises crs-IM-DSS-15k Hz SCS-r17, which is used to indicate whether the terminal supports the CRS-IM of neighbor LTE cell in the DSS scenario of NR 15kHz SCS (Subercarrier Space).

In some embodiments, the base station sends capability query information to the terminal, and the terminal reports the capability information of the CRS interference mitigation to the base station.

In step S104, the base station sends neighbor cell CRS assist information to the terminal, and correspondingly, the terminal receives the neighbor cell CRS assist information sent from the base station.

The base station can send the neighbor cell CRS assist information to the terminal in a case where the terminal supports the CRS interference mitigation of the neighbor cell of the second mode, or can send the neighbor cell CRS assist information regardless of whether the terminal supports the CRS interference mitigation of the neighbor cell of the second mode. The neighbor cell CRS assist information can be carried by a RRC (Radio Resource Control) signaling. The neighbor cell CRS assist information is used to assist the terminal to perform the CRS interference mitigation of the neighbor cell of the second mode.

For example, the neighbor cell CRS assist information comprises: CRS related information of one or more neighbor cells of the second mode. In a case where the neighbor cell is an LTE neighbor cell, the neighbor cell CRS assist information is, for example, LTE-NeighCellsCRS-AssistInfoList IE (Information Element), which is used to provide configuration information of the LTE neighbor cell, and assist the terminal to perform interference mitigation in the scenario with overlapping spectrum for LET and NR. The neighbor cell CRS assist information may be a List (list) containing at most N arrays, and each array in the List indicates CRS related information of one neighbor cell which is known by the network side which may overlap in spectrum with the cell of the first mode where the terminal is located.

In some embodiments, the CRS related information of each of the one or more neighbor cells of the second mode comprises at least one of first indication information or a frequency domain deviation value, the first indication information is used to indicate whether overlapped spectrums of the each of the one or more neighbor cells of the second mode and the cell of the first mode are aligned in frequency domain, and the frequency domain deviation value is the frequency domain deviation value of the overlapped spectrums of the each of the one or more neighbor cells of the second mode and the cell of the first mode. For example, the first indication information is used to indicate whether frequency bands shared by NR and LTE are aligned in frequency domain and/or a frequency domain deviation value.

In some embodiments, in a case where the neighbor cell CRS assist information comprises the CRS related information of multiple neighbor cells of the second mode, the CRS related information of each of the multiple neighbor cells of the second mode comprises a physical cell identifier (PCI) of the each of the multiple neighbor cells of the second mode. In a case where the neighbor cell CRS assist information only comprises the CRS related information of one neighbor cell of the second mode, it may also comprise the physical cell identifier of the neighbor cell of the second mode. When the base station needs to send the CRS related information of the multiple neighbor cells of the second mode to the terminal, the physical cell identifier is mandatory to be comprised in the CRS related information of the each of the multiple neighbor cells of the second mode, so as to avoid that when parameters in the CRS related information of different neighbor cells of the second mode are different, it is difficult for the terminal to determine corresponding relationships between the parameters and the neighbor cells of the second mode, resulting in a failure of a interference cancellation algorithm.

In some embodiments, the CRS related information of the each of the multiple neighbor cells of the second mode further comprises at least one of a physical cell identifier, a remainder of the physical cell identifier modulo 6, a slot number, a duplex mode indication information, a uplink/downlink subframe ratio, a cyclic prefix type indication information, a downlink carrier frequency, a downlink carrier bandwidth, a MBSFN (multicast broadcast single frequency network) subframe configuration, a number of CRS ports, or a CRS muting indication information of the each of the one or more neighbor cells of the second mode.

For example, in a case where the second mode is LTE, the neighbor cell CRS assist information is LTE-NeighCellsCRS-AssistInfoList, and all items of information (each of which is optional) comprised in the CRS related information of the each of the one or more neighbor cells of the second mode are described as follows:
a physical cell identifier (which can be called neighCellId-r17), for example, being EUTRA-PhysCellId;
a remainder of the physical cell identifier modulo 6 (which can be called neighV-Shift-r17), for indicating V-Shift of a LTE neighbor cell, for example, being an ENUMERATED value, with a value range of n0, n1, n2, n3, n4, n5;
a slot number, for example, being the slot number of the LTE neighbor cell;
duplex mode indication information, for indicating that the LTE neighbor cell uses FDD or TDD duplex mode, which may also comprise uplink/downlink subframe ratio of the LTE neighbor cell if the duplex mode is TDD;
cyclic prefix type indication information, for indicating that the LTE neighbor cell uses a normal CP (normal Cyclic Prefix) or an extended CP (extended Cyclic Prefix);
a downlink carrier frequency (which can be called neighCarrierFreqDL-r17), for indicating a downlink center frequency of the LTE neighbor cell, for example, being an INTEGER value with a value range of 0..16838;
a downlink carrier bandwidth (which can be called neighCarrierBandwidthDL-r17), for indicating a number of PRB (Physical Resource Block) occupied by a channel bandwidth of the LTE neighbor cell, for example, being an ENUMERATED value, with a value range of n6, n15, n25, n50, n75, n100, spare2, spare 1;
a MBSFN subframe configuration (which can be called neighMBSFN-SubframeConfigList-r17), for indicating the MBSFN subframe configuration of the LTE neighbor cell, for example, being EUTRA-MBSFN-SubframeConfigList;
a number of CRS ports (which can be called neighNrofCRS-Ports-r17), for indicating a number of CRS antenna ports of the LTE neighbor cell, for example, being an ENUMERATED value, with a value range of n1, n2, n4;
CRS muting indication information (which can be called neighCRS-muting-r17), for indicating whether or not to enable network-based CRS interference mitigation in the LTE neighbor cell, for example, being an ENUMERATED value with a value range of enabled.

In some embodiments, the base station sends second mode CRS pattern information to the terminal, and correspondingly, the terminal also receives the second mode CRS pattern information sent from the base station, wherein the second mode CRS pattern information comprises configuration information of one or more CRSs corresponding to one or more cells of the second mode. This step and step S104 may be in no particular order.

In a case where the second mode is LTE, the second mode CRS pattern information is, for example, RateMatchPatternLTE-CRS (LTE-CRS Rate Match Pattern), which can be sent via a R16 DSS signaling (an existing signaling of the protocol *LTE-CRS-PatternList-r16*), can be sent from the serving cell.

In some embodiments, the configuration information of the CRS corresponding to the each of the one or more cells of the second mode comprises: a downlink carrier frequency, a downlink carrier bandwidth, a number of CRS ports and a remainder of physical cell identifier modulo 6 of the each of the one or more cells of the second mode; or, the configuration information of the CRS corresponding to the each of the one or more cells of the second mode comprises: a downlink carrier frequency, a downlink carrier bandwidth, a MBSFN subframe configuration, a number of CRS ports and a remainder of physical cell identifier modulo 6 of the each of the one or more cells of the second mode.

For example, in a case where the second mode is LTE, all items of information comprised in the configuration information of the CRS corresponding to the each of the one or more cells of the second mode are described as follows:
a downlink carrier frequency (which can be called carrierFreqDL), for example, being an INTEGER value with a value range of 0..16838;
a downlink carrier bandwidth (which can be called carrierBandwidthDL), for example, being an ENUMERATED value, with a value range of n6, n15, n25, n50, n75, n100, spare2, spare1;
a MBSFN subframe configuration (which can be called mbsfn-SubframeConfigList), for example, being EUTRA-MBSFN-SubframeConfigList;
a number of CRS ports (which can be called nrofCRS-Ports) for example, being an ENUMERATED value, with a value range of n1, n2, n4;
a remainder of the physical cell identifier modulo 6 (which can be called v-Shift), for example, being an ENUMERATED value with a value range of n0, n1, n2, n3, n4, n5.

Some information in the neighbor cell CRS assist information and the second mode CRS pattern information is similar. In some embodiments, one or more items of information in the CRS related information of the each of the one or more neighbor cells of the second mode can be missing, and the missing item or items of information can be determined according to the second mode CRS pattern information.

For example, for a neighbor cell of the second mode, in a case where the downlink carrier bandwidth (which can be called neighCarrierBandwidthDL-r17) is missing, the terminal applies a value in the downlink carrier bandwidth (which can be called carrierBandwidthDL) in the second mode CRS pattern information (for example, being RateMatchPatternLTE-CRS);
for a neighbor cell of the second mode, in a case where the downlink carrier frequency (which can be called neighCarrierFreqDL-r17) is missing, the terminal applies the value in the downlink carrier frequency (which can be called carrierFreqDL) of the second mode CRS pattern information (for example, being RateMatchPatternL TE-CRS);
for a neighbor cell of the second mode, in a case where the MBSFN subframe configuration (which can be called neighMBSFN-SubframeConfigList-r17) is missing, if the MBSFN subframe configuration (which can be called mbsfn-SubframeConfigList) in the second mode CRS pattern information (for example, being RateMatchPatternLTE-CRS) is configured, then the terminal applies the value in the MBSFN subframe configuration in the second mode CRS pattern information (for example, being RateMatchPatternLTE-CRS), otherwise, the terminal assumes that the MBSFN in the LTE neighbor cell is not configured;
for a neighbor cell of the second mode, in a case where the number of CRS ports (which can be called neighNrofCRS-Ports-r17) is missing, if the number of CRS ports (which can be called nrofCRS-Ports) in the second mode CRS pattern information (for example, being RateMatchPatternLTE-CRS) is configured, then the terminal applies the value of the number of CRS ports (which can be called nrofCRS-Ports) in the second mode CRS pattern information (for example, being RateMatchPatternLTE-CRS), otherwise the terminal applies a default value n4.

In some embodiments, the terminal may adopt a default network configuration for the each of the one or more neighbor cells of the second mode. For example, for scenario 1, the number of CRS ports of the each of the one or more neighbor cells of the second mode is same as the number of CRS ports (which can be called nrofCRS-Ports) in the second mode CRS pattern information (for example, being RateMatchPatternL TE-CRS); for scenario 2, the number of CRS ports of the each of the one or more neighbor cells of the second mode is 4.

For another example, for scenario 1, the channel bandwidth (downlink carrier bandwidth, which can be called neighCarrierBandwidthDL-r17) and the center frequency (downlink carrier frequency, which can be called neighCarrierFreqDL-r17) of the each of the one or more neighbor cells of the second mode are consistent with the downlink carrier bandwidth and the downlink carrier frequency in the second mode CRS pattern information (for example, being RateMatchPatternLTE-CRS).

For another example, for scenario 1, the MBSFN subframe configuration the each of the one or more neighbor cells of the second mode is consistent with the MBSFN subframe configuration in the second mode CRS pattern information (for example, being RateMatchPatternLTE-CRS), and for scenario 2, the MBSFN is not configured.

For another example, a network-based CRS interference mitigation is not enabled in Scenario 1 and Scenario 2.

The above scenario 1 is a DSS scenario, and the serving cell will send the second mode CRS pattern information (for example, being RateMatchPatternL TE-CRS) to the terminal, while the scenario 2 is a nonDSS scenario, and the serving cell will not send the second mode CRS pattern information (for example, being RateMatchPatternL TE-CRS) to the terminal.

In the above-mentioned embodiments, the relevant content that the one or more items of information missing from the CRS related information of the each of the one or more neighbor cells of the second mode can be determined according to the second mode CRS pattern information, and the relevant content that the terminal can adopt default network configuration for the each of the one or more neighbor cells of the second mode, both belong to the default configuration information configured by the network.

In some embodiments, in a case where the second mode CRS pattern information comprises configuration information of multiple CRSs, the CRS related information of the each of the one or more neighbor cells of the second mode comprises: an index, used to identify the configuration information of a CRS corresponding to a CRS of the each of the one or more neighbor cells of the second mode; the index corresponds to an index order of configuration information of each of the multiple CRSs.

For example, the second mode CRS pattern information comprises configuration information of two CRSs, and the neighbor cell CRS assist information comprises the CRS related information of four neighbor cells of the second mode, so it is necessary to indicate which CRSs of the neighbor cells of the second mode correspond to the configuration information of the first CRS and which CRSs of the neighbor cells of the second mode correspond to the configuration information of the second CRS.

Alternatively, in a case where the configuration information of the CRS corresponding to the each of the one or more cells of the second mode comprises: a downlink carrier frequency, a downlink carrier bandwidth, a number of CRS ports and a remainder of physical cell identifier modulo 6 of the each of the one or more cells of the second mode, the CRS related information of the each of the one or more neighbor cells of the second mode comprises: a downlink carrier frequency, a downlink carrier bandwidth, a number of CRS ports and a remainder of physical cell identifier module 6 of the each of the one or more neighbor cells of the second mode.

Alternatively, in a case where the configuration information of the CRS corresponding to the each of the one or more cells of the second mode comprises: a downlink carrier frequency, a downlink carrier bandwidth, a MBSFN subframe configuration, a number of CRS ports and a remainder of physical cell identifier modulo 6 of the each of the one or more cells of the second mode, the CRS related information of the each of the one or more neighbor cells of the second mode comprises: a downlink carrier frequency, a downlink carrier bandwidth, a MBSFN subframe configuration, a number of CRS ports and a remainder of physical cell identifier module 6 of the each of the one or more neighbor cells of the second mode.

By setting the index or forcing the CRS related information of the each of the one or more neighbor cells of the second mode to contain information consistent with configuration information of a corresponding CRS, the problem that the terminal cannot accurately determine the CRS related information of the each of the one or more neighbor cells of the second mode, which leads to a failure in performing interference mitigation, can be avoided.

In some embodiments, the CRS related information of each of the one or more neighbor cells of the second mode comprises third indication information, used to indicate whether the CRS related information of the each of the one or more neighbor cells of the second mode meets default network configuration information; or the neighbor cell CRS assist information further comprises fourth indication information, used to indicate whether the CRS related information of the one or more neighbor cells of the second mode meets the default configuration information configured by the network. For example, the fourth indication information is, lte-NeighCellsCRS-Assumptions field. If this field is not configured, the default network configuration is valid for all LTE neighbor cells. If this field is configured (that is, false) and LTE-neightcellscrs-AssistInfoList-r17 is configured, the configuration provided in LTE-neightcellscrs-AssistInfoList-r17 will overwrite the default network configuration.

Further, in a case where the third indication information indicates that the CRS related information of the each of the one or more neighbor cells of the second mode does not meet the default configuration information configured by the network, or the fourth indication information indicates that the CRS related information of the one or more neighbor cells of the second mode does not meet the default configuration information configured by the network, the third indication information or the fourth indication information is also used to implicitly indicate the terminal to disable interference mitigation operation to the CRS of the one or more neighbor cells of the second mode.

Through the above information, the terminal can be implicitly instructed to disable the interference mitigation operation to the CRS for neighbor cells, so as to avoid performance degradation caused by wrong assumption of the terminal (the function may also not be disabled, and the terminal will detect information of a CRS of a neighbor cell of a second mode by itself when not disabling the function).

In step S106, the terminal performs interference mitigation according to the neighbor cell CRS assist information.

In some embodiments, the terminal enables the interference mitigation operation to the CRS of the one or more neighbor cells of the second mode according to the neighbor cell CRS assist information, to perform interference detection and interference mitigation.

The neighbor cell CRS assist information can implicitly instruct the terminal to enable the interference mitigation operation to the CRS of the one or more neighbor cells of the second mode, or, the CRS rate match (LTE-CRS-ToMatchAround) signaling of the second mode implicitly indicates the terminal to enable the interference mitigation operation to the CRS of the one or more neighbor cells of the second mode, or, the base station sends the fifth indication information to the terminal, and correspondingly, the terminal receives the fifth indication information sent from the base station, wherein the fifth indication information is used to indicate the terminal to enable the interference mitigation operation to the CRS of the one or more neighbor cells of the second mode.

The fifth indication information is carried by a radio resource control (RRC) signaling. In a case where the terminal supports the CRS interference mitigation of the one or more neighbor cells of the second mode, the base station can instruct the terminal to enable the CRS interference mitigation of the one or more neighbor cells of the second mode in the above manner. The base station can also instruct the terminal to disable the CRS interference mitigation of the one or more neighbor cells of the second mode through the fifth indication information.

In some embodiments, the base station also sends release information of the neighbor cell CRS assist information to the terminal, and correspondingly, the terminal receives the release information of the neighbor cell CRS assist information sent from the base station; the terminal deletes the stored neighbor cell CRS assist information according to the release information of the neighbor cell CRS assist information.

In the above embodiments, the first mode and the second mode can be NR and LTE respectively, which are suitable for the DSS scenario, that is, the first mode and the second mode spectrums overlap. The terminal, located within the cell of the first mode, reports to the base station whether to support the CRS interference mitigation of the one or more neighbor cells of the second mode or not, and the neighbor cell CRS assist information sent from the base station and received by the terminal comprises the CRS related information of the one or more neighbor cells of the second mode, and then the terminal performs the interference mitigation according to the neighbor cell CRS assist information, which can reduce energy consumption of the terminal in interference detection on the CRS(s) of the one or more neighbor cells of the second mode, and can improve reliability and accuracy of downlink reception or the terminal through the interference mitigation.

In the method of the above embodiment, the base station determines whether it is necessary to configure relevant RRC indication signaling for the terminal according to the capability of "whether to support the CRS interference mitigation of the one or more neighbor cells of the second mode" reported by the terminal and according to a deployment situation of the one or more neighbor cells of the second mode. The RRC indication signaling can make the terminal to enable the interference mitigation operation to the CRS of the one or more neighbor cells of the second mode when the terminal receives downlink data. The base station can also additionally send the neighbor cell CRS configuration information to the terminal through RRC signaling (neighbor cell CRS assist information) to assist it to perform the interference detection of the one or more neighbor cells of the second mode at a corresponding position, and then to perform interference mitigation. In order to avoid a possible misinterpretation of the signaling by the terminal side, when there is information of multiple neighbor cells of the second mode that need to be sent, sending rules of the RRC signaling are additionally defined. At the same time, in a case where the shared frequency bands of NR and LTE are not aligned in the frequency domain, the frequency domain deviation value is sent to assist in interference cancellation. The method of the above embodiments is helpful to greatly improve the reliability of downlink data reception of the terminal supporting CRS interference mitigation of neighbor cells and working in a scenario that NR and LTE coexist.

The present disclosure also provides a terminal, which is described below with reference to Fig. 2.

Fig. 2 is a structural diagram of some embodiments of a terminal of the present disclosure. As shown in Fig. 2, the terminal 20 of the embodiments comprises: a sending module 210, a receiving module 220 and an interference mitigation module 230.

The sending module 210 is configured to report capability information of Cell-specific Reference Signal (CRS) interference mitigation to a base station, wherein the capability information of the CRS interference mitigation is configured to indicate whether the terminal in a cell of a first mode supports the CRS interference mitigation of a neighbor cell of a second mode in a scenario with overlapping spectrum for the first mode and the second mode. The sending module can be realized by adopting a transmitter of the terminal.

The receiving module 220 is configured to receive neighbor cell CRS assist information sent from the base station, wherein the neighbor cell CRS assist information comprises CRS related information of one or more neighbor cells of the second mode. The receiving module can be realized by adopting a receiver of the terminal.

The interference mitigation module 230 is configured to perform interference mitigation according to the neighbor cell CRS assist information. The interference mitigation module can be realized by adopting a controller of the terminal.

In some embodiments, the interference mitigation module 230 is configured to enable interference mitigation operation to the CRS of the one or more neighbor cells of the second mode according to the neighbor cell CRS assist information, and perform interference detection and interference mitigation.

In some embodiments, the receiving module 220 is also configured to second mode CRS pattern information sent from the base station, wherein the second mode CRS pattern information comprises configuration information of one or more CRSs corresponding to one or more cells of the second mode.

In some embodiments, the receiving module 220 is also configured to receive fifth indication information sent from the base station, wherein the fifth indication information is configured to indicate the terminal to enable the interference mitigation operation to the CRS of the one or more neighbor cells of the second mode.

In some embodiments, the receiving module 220 is also configured to receive release information of the neighbor cell CRS assist information sent from the base station; the terminal 20 further comprises a deleting module configured to delete the stored neighbor cell CRS assist information according to the release information of the neighbor cell CRS assist information.

Specific contents and forms of various information can refer to the embodiments of the aforementioned interference method, and will not be described here anymore.

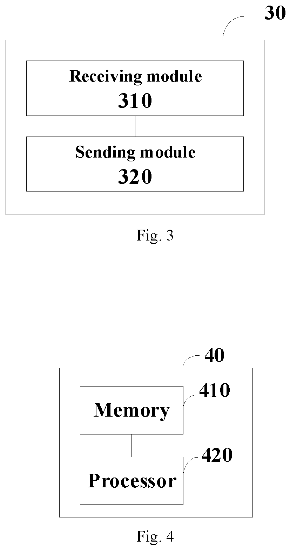

The present disclosure also provides a base station, which is described below with reference to Fig. 3.

Fig. 3 is a structural diagram of some embodiments of the base station of the present disclosure. As shown in Fig. 3, the base station 30 of this embodiment comprises a receiving module 310 and a sending module 320.

The receiving module 310 is configured to receive capability information of Cell-specific Reference Signal (CRS) interference mitigation reported by a terminal, wherein the capability information of the CRS interference mitigation is configured to indicate whether the terminal in a cell of a first mode supports the CRS interference mitigation of a neighbor cell of a second mode in a scenario with overlapping spectrum for the first mode and the second mode. The receiving module can be realized by adopting a receiver of the base station.

The sending module 320 is configured to send neighbor cell CRS assist information to the terminal, wherein the neighbor cell CRS assist information comprises CRS related information of one or more neighbor cells of the second mode, for assisting the terminal to perform interference mitigation on a CRS(s) of the one or more neighbor cells of the second mode. The sending module can be realized by adopting a transmitter of the base station.

In some embodiments, the sending module 320 is also configured to send second mode CRS pattern information to the terminal, wherein the second mode CRS pattern information comprises configuration information of one or more CRSs corresponding to one or more cells of the second mode.

In some embodiments, the sending module 320 is also configured to send fifth indication information sent from the base station, wherein the fifth indication information is configured to indicate the terminal to enable the interference mitigation operation to the CRS of the one or more neighbor cells of the second mode.

Specific contents and forms of various information can refer to the embodiments of the aforementioned interference methods, and will not be described here anymore.

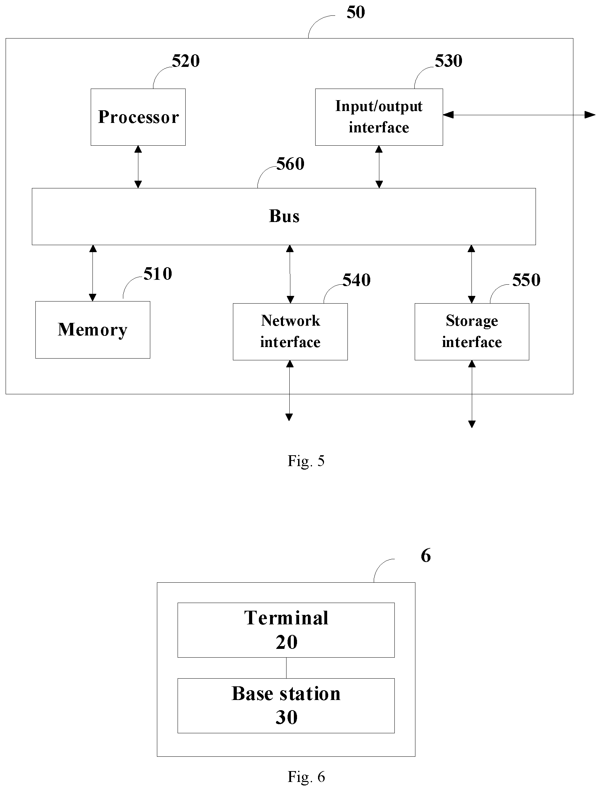

A communication device (a terminal and/or a base station) in the embodiments of the present disclosure can be realized by various computing apparatuses or computer systems, which are described below with reference to Figs. 4 and 5.

Fig. 4 is a structural diagram of some embodiments of the communication device of the present disclosure. As shown in Fig. 4, the device 40 of the embodiments comprises: a memory 410 and a processor 420 coupled to the memory 410, and the processor 420 is configured to execute the interference mitigation method in any embodiment of the present disclosure based on instructions stored in the memory 410.

Wherein the memory 410 may comprise, for example, a system memory, a fixed nonvolatile storage medium, and the like. The system memory stores, for example, an operating system, application programs, a Boot Loader, a database and other programs, etc.

Fig. 5 is a structural diagram of other embodiments of the communication device of the present disclosure. As shown in Fig. 5, the device 50 of the embodiments comprises: a memory 510 and a processor 520, which are similar to the memory 410 and the processor 420 respectively. Input/output interface 530, network interface 540, storage interface 550, and the like may also be included. These interfaces 530, 540, 550 and the memory 510 and the processor 520 can be connected, for example, by a bus 560. Wherein, the input/output interface 530 provides a connection interface for input/output apparatuses such as a displayer, a mouse, a keyboard and a touch screen. The network interface 540 provides a connection interface for various networked apparatuses, for example, which can be connected to a database server or a cloud storage server, or the like. The storage interface 550 provides a connection interface for external storage apparatuses such as SD cards, USB flash drives and the like.

The present disclosure also provides an interference mitigation system, which is described below with reference to Fig. 6.

Fig. 6 is a structural diagram of some embodiments of the interference mitigation system of the present disclosure. As shown in Fig. 6, the system of the embodiments comprises: the terminal 20 of any aforementioned embodiment and the terminal 30 of any aforementioned embodiment.

It should be understood by those skilled in the art that the embodiments of the present disclosure can be provided as a method, a system, or a computer program product. Therefore, the present disclosure can take the form of an entirely hardware embodiment, an entirely software embodiment, or an embodiment combining software and hardware aspects. Furthermore, the present disclosure may take the form of a computer program product embodied on one or more computer-usable non-transitory storage media (including but not limited to disk storage, CD-ROM, optical storage, etc.) in which computer-usable program codes are included.

The present disclosure is described with reference to flowcharts and/or block diagrams of the method, device (system), and computer program product according to the embodiments of the present disclosure. It should be understood that each flow and/or block in the flowcharts and/or block diagrams, and combinations of the flow(s) and/or block(s) in the flowcharts and/or block diagrams can be realized by computer program instructions. These computer program instructions may be provided to a processor of a general-purpose computer, special-purpose computer, embedded processor or other programmable data processing apparatus to produce a machine, such that the instructions which are executed by the processor of the computer or other programmable data processing apparatus produce a device for implementing functions specified in the flow or flows of the flowcharts and/or block or blocks of the block diagrams.

[**00128**] These computer program instructions may also be stored in a computer-readable memory that can direct a computer or other programmable data processing apparatuses to function in a particular manner, such that the instructions stored in the computer-readable memory produce a manufactured product including instruction device that implements functions specified in the flow or flows of the flowcharts and/or block or blocks of the block diagrams.

[**00129]** These computer program instructions may also be loaded onto a computer or other programmable data processing apparatuses, such that a series of operational steps are performed on the computer or other programmable apparatuses to produce a computer-implemented process, and thereby the instructions executed on the computer or other programmable apparatuses provide steps for implementing functions specified in the flow or flows of the flowcharts and/or block or blocks of the block diagrams.

[**00130**] The above is only the preferred embodiments of the present disclosure, and it is not used to limit the present disclosure. Any modification, equivalent substitution, improvement, and so on made within the spirit and principle of the present disclosure should be included in the protection scope of the present disclosure.

## Claims

1. An interference mitigation method, executed by a terminal, comprising:
reporting capability information of Cell-specific Reference Signal (CRS) interference mitigation to a base station, wherein the capability information of the CRS interference mitigation is used to indicate whether the terminal in a cell of a first mode supports the CRS interference mitigation of a neighbor cell of a second mode in a scenario with overlapping spectrum for the first mode and the second mode;
receiving neighbor cell CRS assist information sent from the base station, wherein the neighbor cell CRS assist information comprises CRS related information of one or more neighbor cells of the second mode; and
performing interference mitigation according to the neighbor cell CRS assist information.

2. The interference mitigation method according to claim 1, wherein:
the CRS related information of each of the one or more neighbor cells of the second mode comprises at least one of first indication information or a frequency domain deviation value, the first indication information is used to indicate whether overlapped spectrums of the each of the one or more neighbor cells of the second mode and the cell of the first mode are aligned in frequency domain, and the frequency domain deviation value is the frequency domain deviation value of the overlapped spectrums of the each of the one or more neighbor cells of the second mode and the cell of the first mode.

3. The interference mitigation method according to claim 1 or 2, wherein:
in a case where the neighbor cell CRS assist information comprises the CRS related information of multiple neighbor cells of the second mode, the CRS related information of each of the multiple neighbor cells of the second mode comprises a physical cell identifier of the each of the multiple neighbor cells of the second mode.

4. The interference mitigation method according to any of claims 1-3, further comprising:
receiving second mode CRS pattern information sent from the base station, wherein the second mode CRS pattern information comprises configuration information of one or more CRSs corresponding to one or more cells of the second mode.

5. The interference mitigation method according to claim 4, wherein:
in a case where the second mode CRS pattern information comprises configuration information of multiple CRSs, configuration information of a CRS corresponding to each cell of the second mode comprises a downlink carrier frequency, a downlink carrier bandwidth, a number of CRS ports and a remainder of a physical cell identifier modulo 6 of the each cell of the second mode, and the CRS related information of each of the one or more neighbor cells of the second mode comprises an index, used to identify configuration information of a CRS corresponding to a CRS of the each of the one or more neighbor cells of the second mode, or the CRS related information of the each of the one or more neighbor cells of the second mode comprises a downlink carrier frequency, a downlink carrier bandwidth, a number of CRS ports and a remainder of a physical cell identifier modulo 6 of the each of the one or more neighbor cells of the second mode.

6. The interference mitigation method according to claim 4 or 5, wherein:
in a case where the second mode CRS pattern information comprises configuration information of multiple CRSs , configuration information of a CRS corresponding to each cell of the second mode comprises a downlink carrier frequency, a downlink carrier bandwidth, a multicast broadcast single frequency network (MBSFN) subframe configuration, a number of CRS ports and a remainder of a physical cell identifier modulo 6 of the each cell of the second mode, and
the CRS related information of each of the one or more neighbor cells of the second mode comprises an index, used to identify the configuration information of a CRS corresponding to a CRS of the each of the one or more neighbor cells of the second mode, or the CRS related information of the each of the one or more neighbor cells of the second mode comprises a downlink carrier frequency, a downlink carrier bandwidth, a MBSFN subframe configuration a number of CRS ports and a remainder of a physical cell identifier modulo 6 of the each of the one or more neighbor cells of the second mode.

7. The interference mitigation method according to claim 5 or 6, wherein the index corresponds to an index order of configuration information of each of the multiple CRSs.

8. The interference mitigation method according to any of claims 1-7, wherein:
the CRS related information of each of the one or more neighbor cells of the second mode comprises third indication information, used to indicate whether the CRS related information of the each of the one or more neighbor cells of the second mode meets default network configuration information; or
the neighbor cell CRS assist information further comprises fourth indication information, used to indicate whether the CRS related information of the one or more neighbor cells of the second mode meets default network configuration information.

9. The interference mitigation method according to claim 8, wherein in a case where the third indication information indicates that the CRS related information of the each of the one or more neighbor cells of the second mode does not meet the default configuration information configured by the network, or the fourth indication information indicates that the CRS related information of the one or more neighbor cells of the second mode does not meet the default configuration information configured by the network, the third indication information or the fourth indication information is also used to implicitly indicate the terminal to disable interference mitigation operation to the CRS of the one or more neighbor cells of the second mode.

10. The interference mitigation method according to any of claims 2-9, wherein:
the CRS related information of the each of the one or more neighbor cells of the second mode further comprises at least one of a physical cell identifier, a remainder of the physical cell identifier modulo 6, a slot number, a duplex mode indication information, a uplink/downlink subframe ratio, a cyclic prefix type indication information, a downlink carrier frequency, a downlink carrier bandwidth, a multicast broadcast single frequency network (MBSFN) subframe configuration, a number of CRS ports, or a CRS muting indication information of the each of the one or more neighbor cells of the second mode.

11. The interference mitigation method according to any of claims 1-10, wherein the performing interference mitigation according to the neighbor cell CRS assist information comprises:
enabling interference mitigation operation to the CRS of the one or more neighbor cells of the second mode according to the neighbor cell CRS assist information to perform interference detection and interference mitigation, wherein the neighbor cell CRS assist information or a CRS rate match signaling of the second mode implicitly indicates the terminal to enable the interference mitigation operation to the CRS of the one or more neighbor cells of the second mode.

12. The interference mitigation method according to any of claims 1-11, further comprising:
receiving fifth indication information sent from the base station, wherein the fifth indication information is used to indicate the terminal to enable the interference mitigation operation to the CRS of the one or more neighbor cells of the second mode.

13. The interference mitigation method according to claim 12, wherein the fifth indication information is carried by a radio resource control (RRC) signaling.

14. The interference mitigation method according to any of claims 1-13, further comprising:
receiving release information of the neighbor cell CRS assist information sent from the base station; and
deleting the stored neighbor cell CRS assist information according to the release information of the neighbor cell CRS assist information.

15. The interference mitigation method according to any of claims 1-14, wherein the neighbor cell CRS assist information is carried by a radio resource control (RRC) signaling.

16. The interference mitigation method according to any of claims 1-15, wherein in a case where the neighbor cell CRS assist information comprises the CRS related information of multiple neighbor cells of the second mode, the CRS related information of each of the multiple neighbor cells of the second mode comprises: a physical cell identifier or a remainder of the physical cell identifier modulo 6 of the each of the multiple neighbor cells of the second mode.

17. An interference mitigation method, which is executed by a base station, comprising:
receiving capability information of Cell-specific Reference Signal (CRS) interference mitigation reported by a terminal, wherein the capability information of the CRS interference mitigation is used to indicate whether the terminal in a cell of a first mode supports the CRS interference mitigation of a neighbor cell of a second mode in a scenario with overlapping spectrum for the first mode and the second mode; and
sending neighbor cell CRS assist information to the terminal, wherein the neighbor cell CRS assist information comprises CRS related information of one or more neighbor cells of the second mode, for assisting the terminal to perform interference mitigation on a CRS(s) of the one or more neighbor cells of the second mode.

18. The interference mitigation method according to claim 17, wherein:
the CRS related information of each of the one or more neighbor cells of the second mode comprises at least one of first indication information or a frequency domain deviation value, the first indication information is used to indicate whether overlapped spectrums of the each of the one or more neighbor cells of the second mode and the cell of the first mode are aligned in frequency domain, and the frequency domain deviation value is the frequency domain deviation value of the overlapped spectrums of the each of the one or more neighbor cells of the second mode and the cell of the first mode.

19. The interference mitigation method according to claim 17 or 18, wherein in the case where the neighbor cell CRS assist information comprises the CRS related information of multiple neighbor cells of the second mode, the CRS related information of each of the multiple neighbor cells of the second mode comprises a physical cell identifier or a remainder of the physical cell identifier modulo 6 of the each of the multiple neighbor cells of the second mode.

20. The interference mitigation method according to any of claims 17-19, further comprising:
sending second mode CRS pattern information to the terminal, wherein the second mode CRS pattern information comprises configuration information of one or more CRSs corresponding to one or more cells of the second mode.

21. The interference mitigation method according to claim 20, wherein:
in a case where the second mode CRS pattern information comprises configuration information of multiple CRSs, and configuration information of a CRS corresponding to each cell of the second mode comprises a downlink carrier frequency, a downlink carrier bandwidth, a number of CRS ports and a remainder of a physical cell identifier modulo 6 of the each cell of the second mode, and the CRS related information of each of the one or more cells of the second mode comprises an index, used to identify configuration information of a CRS corresponding to a CRS of the each of the one or more cells of the second mode, or a group of related information of the CRS of the each of the one or more cells of the second mode comprises a downlink carrier frequency, a downlink carrier bandwidth, a number of CRS ports and a remainder of a physical cell identifier modulo 6 of the each of the one or more cells of the second mode.

22. The interference mitigation method according to claim 20, wherein:
in a case where the second mode CRS pattern information comprises configuration information of multiple CRSs , configuration information of a CRS corresponding to each cell of the second mode comprises a downlink carrier frequency, a downlink carrier bandwidth, a multicast broadcast single frequency network (MBSFN) subframe configuration, a number of CRS ports and a remainder of a physical cell identifier modulo 6 of the each cell of the second mode, and
the CRS related information of each of the one or more cells of the second mode comprises an index, used to identify the configuration information of a CRS corresponding to a CRS of the each of the one or more cells of the second mode, or the CRS related information of each of the one or more cells of the second mode comprises an index, used to identify the configuration information of a CRS corresponding to a CRS of the each of the one or more cells of the second mode, or a group of related information of the CRS of the each of the one or more cells of the second mode comprises a downlink carrier frequency, a downlink carrier bandwidth, a MBSFN subframe configuration a number of CRS ports and a remainder of a physical cell identifier modulo 6 of the each of the one or more cells of the second mode.

23. The interference mitigation method according to any of claims 17-22, wherein:
the CRS related information of each of the one or more neighbor cells of the second mode comprises third indication information, used to indicate whether a group of related information of the CRS of the each of the one or more neighbor cells of the second mode meets default network configuration information; or
the neighbor cell CRS assist information further comprises fourth indication information, used to indicate whether one or more groups of related information of the CRS(s) of the one or more neighbor cells of the second mode meets the default configuration information configured by the network.

24. The interference mitigation method according to claim 23, wherein in a case where the third indication information indicates that a group of related information of the CRS of the each of the one or more neighbor cells of the second mode does not meet the default configuration information configured by the network, or the fourth indication information indicates that one or more groups of related information of the CRS(s) of the one or more neighbor cells of the second mode does not meet the default configuration information configured by the network, the third indication information or the fourth indication information is also used to implicitly indicate the terminal to disable interference mitigation operation to the CRS of the one or more neighbor cells of the second mode.

25. The interference mitigation method according to any of claims 17-24, further comprising:
sending fifth indication information sent from the base station, wherein the fifth indication information is used to indicate the terminal to enable the interference mitigation operation to the CRS of the one or more neighbor cells of the second mode.

26. A terminal, comprising:
a sending module configured to report capability information of Cell-specific Reference Signal (CRS) interference mitigation to a base station, wherein the capability information of the CRS interference mitigation is used to indicate whether the terminal in a cell of a first mode supports the CRS interference mitigation of a neighbor cell of a second mode in a scenario with overlapping spectrum for the first mode and the second mode;
a receiving module configured to receive neighbor cell CRS assist information sent from the base station, wherein the neighbor cell CRS assist information comprises CRS related information of one or more neighbor cells of the second mode; and
an interference mitigation module configured to perform interference mitigation according to the neighbor cell CRS assist information.

27. A base station, comprising:
a receiving module configured to receive capability information of Cell-specific Reference Signal (CRS) interference mitigation reported by a terminal, wherein the capability information of the CRS interference mitigation is used to indicate whether the terminal in a cell of a first mode supports the CRS interference mitigation of a neighbor cell of a second mode in a scenario with overlapping spectrum for the first mode and the second mode; and
a sending module configured to send neighbor cell CRS assist information to the terminal, wherein the neighbor cell CRS assist information comprises CRS related information of one or more neighbor cells of the second mode, for assisting the terminal to perform interference mitigation on a CRS(s) of the one or more neighbor cells of the second mode.

28. An interference mitigation system, comprising: the terminal according to claim 26 and the base station according to claim 27.

29. A communication device, comprising:
a processor; and
a memory coupled to the processor, for storing instructions which when executed by the processor, cause the processor to execute the interference mitigation method according to any of claims 1-25.

30. A non-transitory computer-readable storage medium, on which a computer program is stored, wherein the computer program, when executed by a processor, cause the processor to execute the interference mitigation method according to any of claims 1-25.
